# EUROPEAN PATENT SPECIFICATION

(11) **EP 4 265 544 B1**
(45) Date of publication and mention of the grant of the patent: **25.12.2024**
(21) Application number: 23169067.8
(22) Date of filing: 20.04.2023
(51) Int. Cl.: B65G 15/12, B65G 21/12

(54) **END-OF-LINE CONVEYOR SYSTEM AND METHOD FOR CONVEYING AND PICKING UP ONE OR MORE PRODUCTS BY MEANS OF SAID END-OF-LINE CONVEYOR SYSTEM**
END-OF-LINE-FÖRDERSYSTEM UND VERFAHREN ZUM FÖRDERN UND AUFNEHMEN EINES ODER MEHRERER PRODUKTE MITTELS DES END-OF-LINE-FÖRDERSYSTEMS
SYSTÈME DE TRANSPORT EN BOUT DE LIGNE ET PROCÉDÉ DE TRANSPORT ET DE COLLECTE D'UN OU DE PLUSIEURS PRODUITS AU MOYEN DUDIT SYSTÈME DE TRANSPORT EN BOUT DE LIGNE

(30) Priority: 22.04.2022 IT 202200007982
(43) Date of publication of application: 25.10.2023
(73) Proprietor: Itipack Srl, 36030 Villaverla (VI) (IT)
(72) Inventor: BENETTI, Bruno, 36030 VILLAVERLA (VI) (IT)
(74) Representative: Marchioro, Paolo

(56) References cited:
- EP-A1- 2 864 227
- US-A- 3 151 754
- US-A- 3 967 737

## Description

The present invention relates to an end-of-line conveyor system defining a predefined, substantially horizontal path along which one or more products are adapted to be conveyed from an inlet point to a pick-up point.

The invention also relates to a method for conveying one or more products along a predefined path and for picking up those products by the aforesaid end-of-line conveyor system.

It is well known that conveyor systems are provided along plants producing various types of products, usually arranged at the end of the line, to move these finished products from the outlet of the plant to a pick-up point of the same, usually by means of forklifts provided with forks. US 3 151 754 A discloses an end-of-line conveyor system according to the preamble of claim 1.

It is not excluded, however, that such conveyor systems may also be arranged at the initial position or at intermediate positions of these production plants, between one processing unit and the following one.

For this reason, in this context the term "end-of-line conveyor system" is not to be understood as exclusively encompassing conveyor systems arranged at the outlet of a production plant, but should also be understood to refer to those conveyor systems arranged at intermediate positions in a production plant.

In any case, such conveyor systems, in order to fulfil the aforesaid task and enable picking up the products, are provided with a support structure defining the aforesaid predefined path and at least one handling kinematic mechanism associated with this support structure and configured to move these products from said inlet point to the pick-up point.

In addition, in order to allow such products to be picked up, the prior art end-of-line conveyor systems comprise a lifting unit capable of lifting said products and releasing them from said handling kinematic mechanism, so as to intervene with the forks of a forklift between the same handling kinematic mechanism and the product in order to pick up the latter.

In particular, in order to allow an operator to pick up the aforesaid products from the end-of-line conveyor system, the lifting unit is provided with suitable free passages along its length, in order to allow a pair of forks belonging to the aforesaid forklift to be inserted from either side of the conveyor system. However, clearly, such lifting units according to the prior art have such free passages with a predetermined size and spacing.

This, disadvantageously, implies that such lifting units are only suitable for one or limited types of products of a predefined size. Therefore, disadvantageously, when it is required to convey products of different sizes and types by means of the same conveyor system, these lifting units must be suitably adapted and pre-configured before starting the production of the new batch of products. Moreover, still disadvantageously, it is not excluded that, during the same production batch, the products to be conveyed are of different types, such as different components of a single complex system. In this case, such a static approach is not at all suitable to fulfil the task of making it possible to pick up said products of different types.

In an attempt to overcome this drawback, a solution of the prior art provides to create lifting units configured and shaped to support and make it possible to pick up products of various sizes, by inserting pairs of forks with different pitches.

However, even such a prior art solution does not allow to simultaneously handle a large number of products with different formats and a large number of different pitches of the pairs of forks.

The present invention intends to overcome the aforesaid drawbacks of the prior art.

In particular, the object of the invention is to create a universal end-of-line conveyor system capable of handling any type of product format.

In particular, the object of the invention is to create an end-of-line conveyor system that does not require any adjustments and changes in the format in order to handle different types of products.

Furthermore, the object of the invention is to create an end-of-line conveyor system capable of automatically adapting to different types of products, even during the same production batch.

The above-mentioned objects are achieved by the end-of-line conveyor system according to the features set out in claim 1.

Further features of the end-of-line conveyor system are described in the dependent claims.

Furthermore, these objects are also achieved by the method of conveying one or more products along a predefined path and picking up these products by means of the aforesaid end-of-line conveyor system, according to the features set out in claim 10.

Advantageously, the end-of-line conveyor system, while being able to universally handle different types of products, has a simplified structure and is therefore little prone to wear and malfunction.

The aforesaid objects, together with the advantages that will be mentioned hereinafter, are indicated by the description of an embodiment of the invention, which is given by way of non-limiting example with reference to the attached drawings, wherein:
- Fig. 1 shows an axonometric view of a preferred embodiment of an end-of-line conveyor system of the invention;
- Fig. 2 shows a top view of the preferred embodiment of an end-of-line conveyor system of the invention of Fig. 1;
- Fig. 3 shows a front view of the preferred embodiment of an end-of-line conveyor system of the invention of Fig. 1;
- Fig. 4 shows a side view of the preferred embodiment of an end-of-line conveyor system of the invention of Fig. 1;
- Fig. 5 shows in an isolated view a comb-like element belonging to the end-of-line conveyor system of the invention of Fig. 1;
- Fig. 6 shows a detail of a comb-like element arranged in the rest position, belonging to the end-of-line conveyor system of the invention of Fig. 1;
- Fig. 7 shows a detail of a comb-like element arranged in the forced position, belonging to the end-of-line conveyor system of the invention of Fig. 1.

Figs. 8 to 14 show the steps of the method of the invention, implemented by means of the end-of-line conveyor system of the invention of Fig. 1.

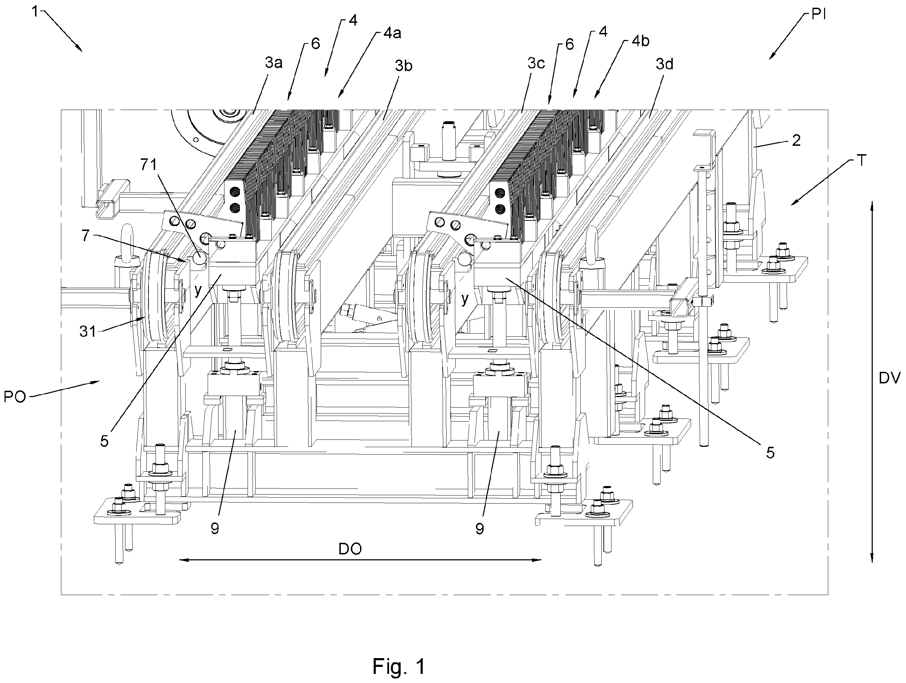

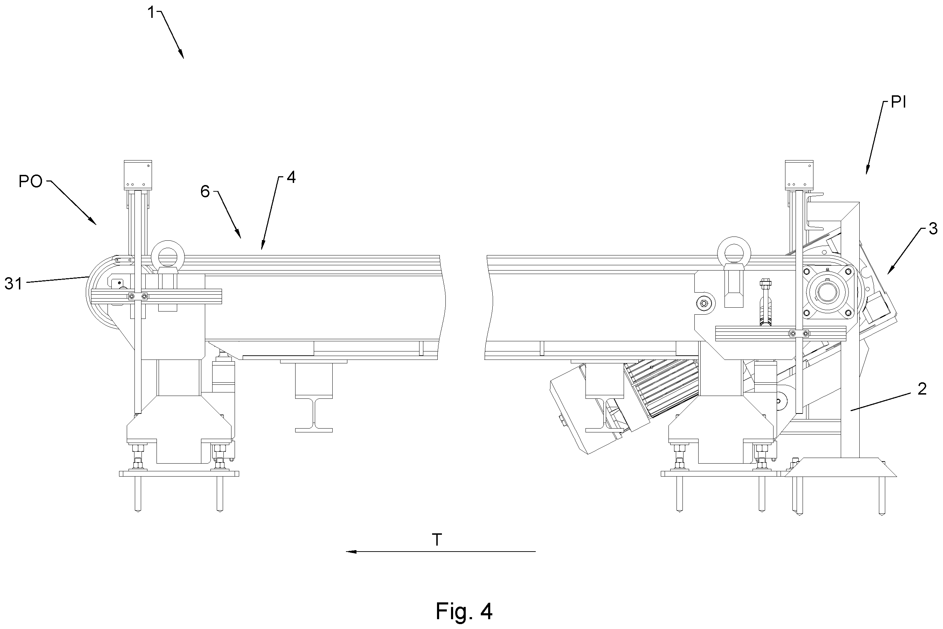

The end-of-line conveyor system of the invention is represented in Figs. 1 to 4, where it is globally referred to as **1.**

Such an end-of-line conveyor system **1,** as it can be seen in Figs. 1, 2 and 4, defines a predefined path **T** that is substantially horizontal, along which one or more products **O** are adapted to be conveyed from an inlet point **PI** to a pick-up point **PO.**

In particular, the end-of-line conveyor system **1** comprises a support structure **2** defining such predefined path **T.**

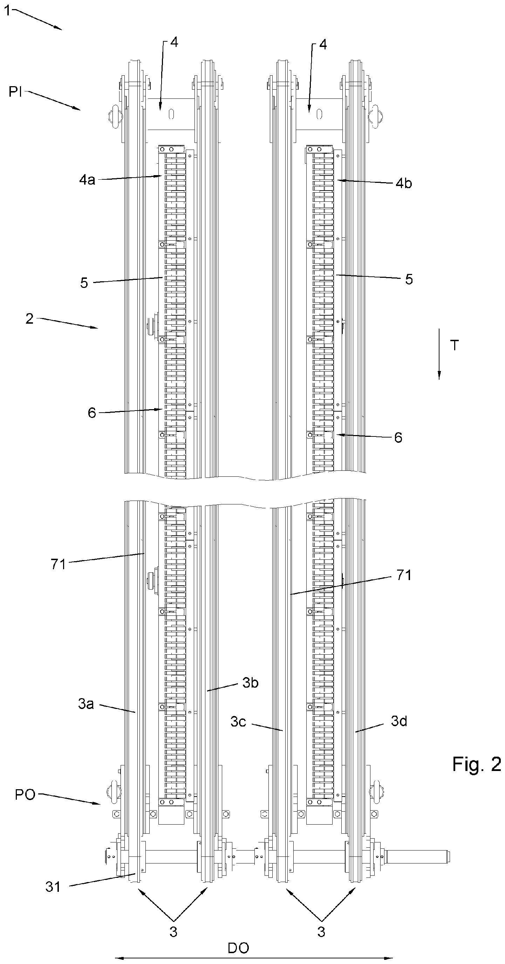

According to the preferred embodiment shown in Fig. 2, such an end-of-line conveyor system **1** also comprises four handling kinematic mechanisms, globally referred to as **3** and individually as **3a, 3b, 3c** and **3d**, associated with the support structure **2** and arranged parallel to each other along such predefined path **T.** Each of the aforesaid four handling kinematic mechanisms **3a, 3b, 3c** and **3d** is configured to contribute to moving products **O** from the inlet point **PI** to the pick-up point **PO.**

It is not excluded, however, that according to different embodiments of the invention, the end-of-line conveyor system **1** comprises a single handling kinematic mechanism **3** or comprises a plurality of handling kinematic mechanisms **3** in a number other than four, always arranged parallel to each other along such predefined path **T.**

Furthermore, it cannot be excluded that, according to an alternative embodiment, the end-of-line conveyor system **1** is not provided with such handling kinematic mechanisms **3.**

Returning to the preferred embodiment of the invention, each of the aforesaid four handling kinematic mechanisms **3a, 3b, 3c** and **3d** comprises a catenary system **31,** capable of feeding, when supported on the latter, the products **O** along the aforesaid predefined path **T.**

Alternatively, each of the aforesaid four handling kinematic mechanisms **3a, 3b, 3c** and **3d** could comprise a belt system or any other mechanical system capable of feeding the aforesaid products **O** along the predefined path **T.**

The end-of-line conveyor system **1,** according to the preferred embodiment of the invention, comprises two lifting units, globally referred to as **4** and individually as **4a** and **4b,** associated with the support structure **2** and arranged parallel to each other along said predefined path **T.**

Even in greater detail, as it can be seen in Figs. 1 and 2, each of the aforementioned two lifting units **4a** and **4b** is arranged between two of the aforementioned handling kinematic mechanisms **3** adjacent to each other, in particular, the first lifting unit **4a** is interposed between the first handling kinematic mechanism **3a** and the second handling kinematic mechanism **3b,** while the second lifting unit **4b** is interposed between the third handling kinematic mechanism **3c** and the fourth handling kinematic mechanism **3d.**

In this case also, it is not excluded that, according to different embodiments of the invention, the end-of-line conveyor system **1** may comprise a different number of lifting units **4.**

In any case, each of the aforesaid lifting units **4** is configured to lift and disengage the products **O** from the handling kinematic mechanism **3,** so that these products **O** can be picked up from the end-of-line conveyor system **1** by means of appropriate external forklifts **CE** provided with forks **F** or similar gripping systems.

According to the invention, each of the aforesaid lifting units **4** comprises a lifting base **5** operatively associated with the support structure **2,** so that it can be moved in a vertical direction **DV** relative to the same support structure **2.** As it can be seen in Fig. 1, each of the aforesaid lifting units **4** provides that its lifting base **5** extends along the predefined path **T,** preferably along the entire predefined path **T.**

According to the preferred embodiment of the invention, in order to implement the aforesaid movement of the lifting base **5** relative to the support structure **2,** in both directions, along said vertical direction **DV,** each lifting unit **4** comprises a plurality of hydraulic or pneumatic pistons **9** operatively associated with the same lifting base **5.**

It is not excluded, however, that according to different embodiments of the invention, each lifting unit **4** may be provided with different types of actuators, of the type known in itself, such as electric lifting systems, in particular geared motors or the like, capable of moving the aforesaid lifting base **5** of each lifting unit **4** along the vertical direction **DV,** relative to the support structure **2.**

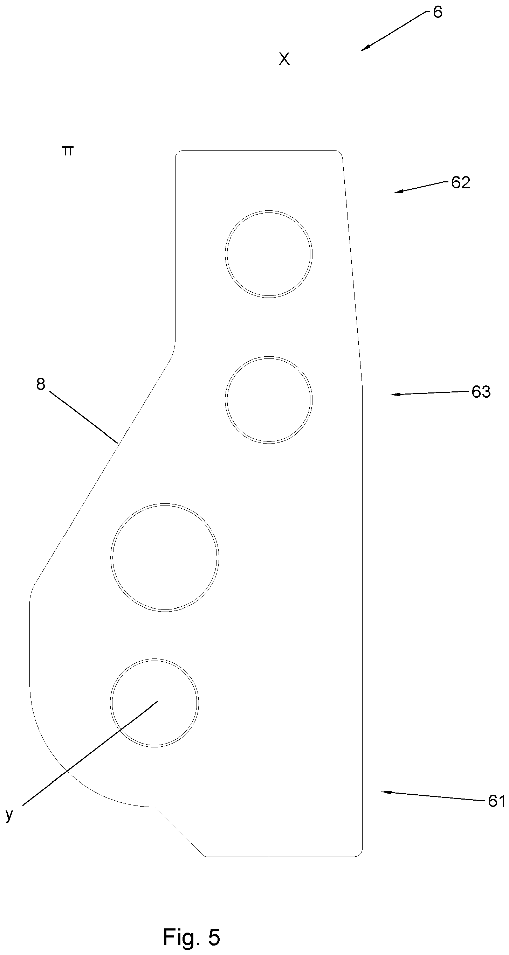

Each lifting unit **4** is also provided with a plurality of comb-like elements **6,** each, as it can be seen in Fig. 5, substantially extending along a longitudinal axis **X.**

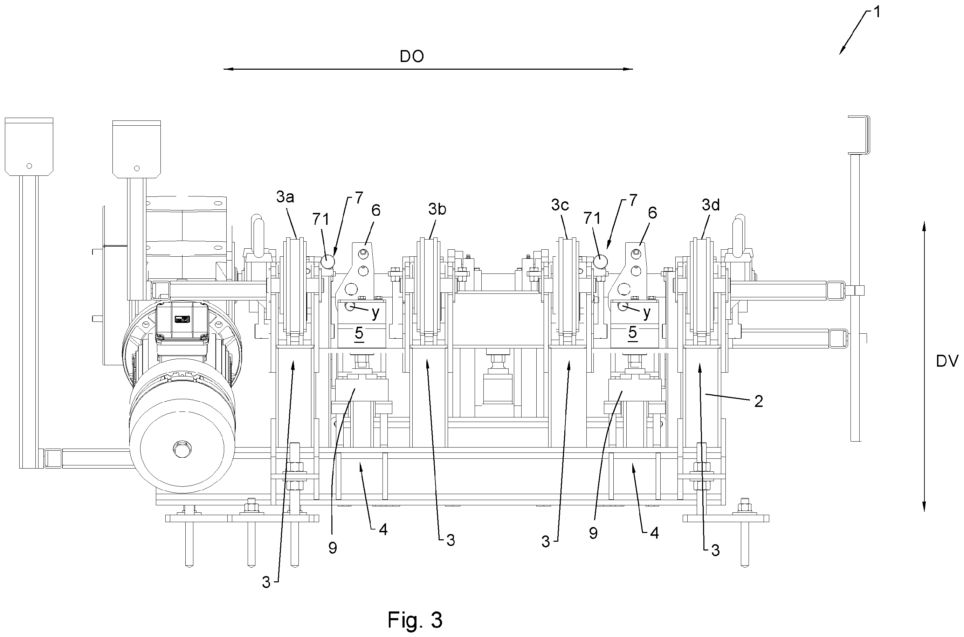

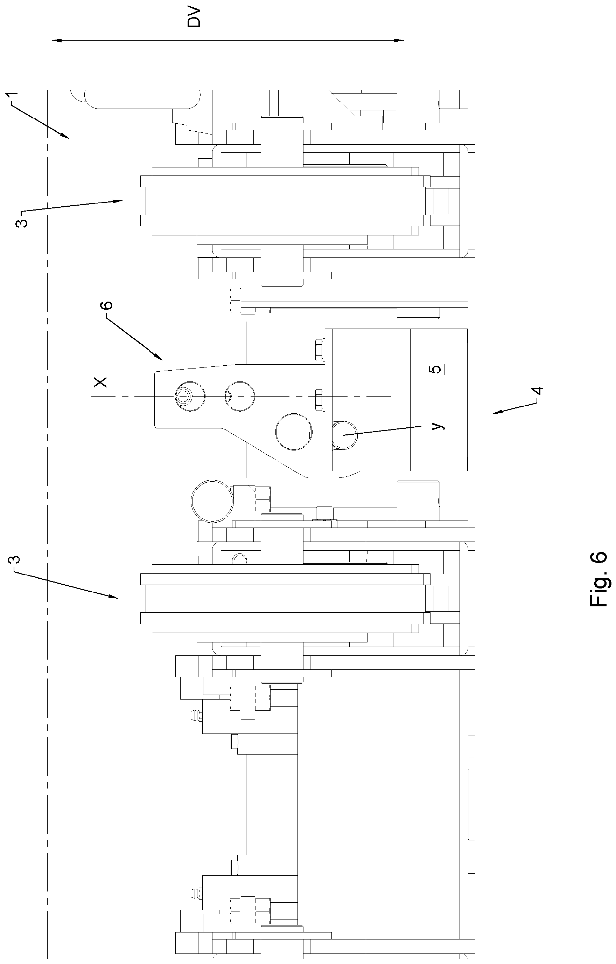

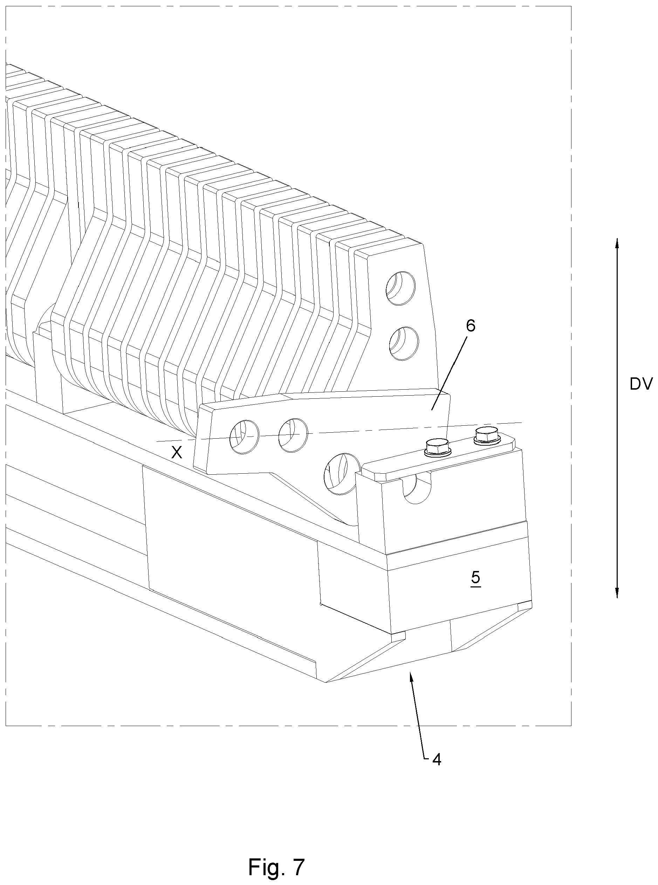

Such comb-like elements **6,** as is observed in Figs. 1 and 3, are freely hinged at the lifting base **5,** one after the other, along the predefined path **T** according to a rotation axis **Y** parallel to the same predefined path **T,** so that each of said comb-like elements **6,** independently from the remaining comb-like elements **6,** can rotate from a first rest position, according to which said longitudinal axis **X** is parallel to the vertical direction **DV,** as shown in Fig. 6, to a second forced position, according to which said longitudinal axis **X** is parallel to the horizontal direction **DO,** as shown in Fig. 7.

Obviously, such comb-like elements **6** can also be rotated in the opposite direction, from the aforesaid forced position to the rest position, as will be described in detail hereinafter.

In particular, according to the preferred embodiment of the invention, for the reasons shortly described, as it can be seen in Fig. 5, each of such comb-like elements **6,** according to a plane orthogonal **π** to the rotation axis **Y,** has along said longitudinal axis **X** a first end section **61** with an asymmetrical shape, and a second end section **62** with a symmetrical shape, joined to each other by an interconnection section **63,** wherein an oblique side **8** with respect to the longitudinal axis **X** is identified.

The first end section **61** is freely hinged in an off-centred position to the lifting base **5** at the oblique side **8,** such that each of said comb-like elements **6** is configured to rotate, at the oblique side **8,** by an angle in the region of 90° about the rotation axis **Y,** from the rest position to said forced position. Obviously, each of these comb-like elements **6** is also able to rotate by the aforesaid 90° angle, about the rotation axis **Y,** in the opposite direction so as to be able to switch from the aforesaid forced position to the rest position. Advantageously, the fact that the comb-like elements **6** are hinged in an off-centred position at the first end section **61** makes it possible to facilitate the return of the same comb-like elements **6** from the forced position to the rest position, exploiting the unbalance of the weights precisely due to this off-centred hinge.

Finally, each lifting unit **4** comprises return means **7** configured to move the plurality of comb-like elements **6** from the forced position to the rest position.

In particular, preferably but not necessarily, the return means **7** comprise a cylindrical contrast bar **71** arranged along the predefined path **T,** adjacent to the comb-like elements **6,** at the oblique sides **8.**

More specifically, this cylindrical contrast bar **71** is configured to progressively contact the first asymmetrical section **61,** the oblique side **8** of the interconnection section **63** and the second symmetrical section **62** of the comb-like elements **6** arranged at the second position, while lowering the lifting unit **4.** The rotation of the same comb-like elements **6** from the forced position to the rest position is thereby mechanically induced.

Alternatively, according to a different embodiment of the invention, such return means **7** could comprise elastic elements configured to induce the rotation of the comb-like elements **6** from the aforesaid forced position to the rest position. Operationally, the method for conveying one or more products **O** along a predefined path **T** and for picking up those products **O** using the end-of-line conveyor system of the invention comprises the steps described hereinafter.

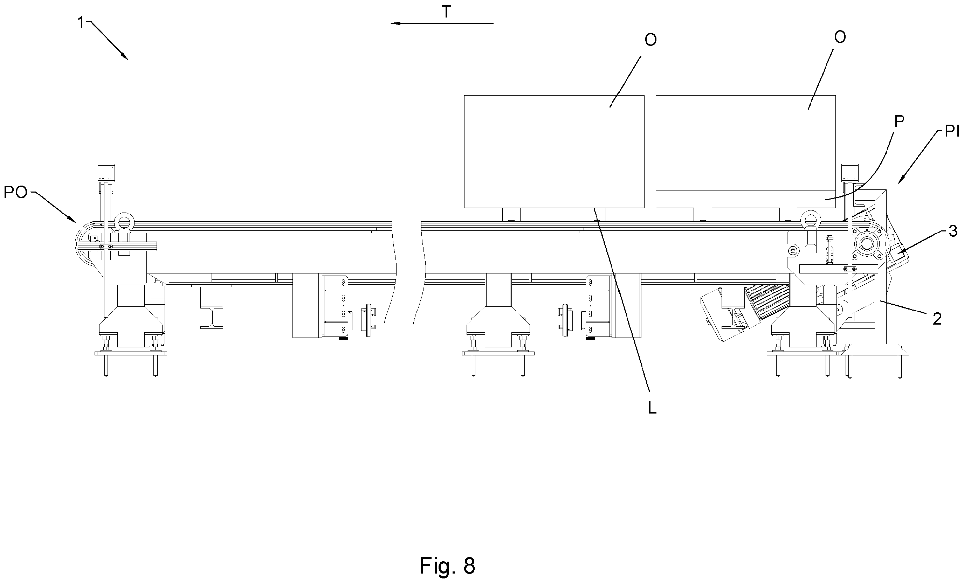

First of all, as schematised in Fig. 8, the method involves loading products **O** at an inlet point **PI** of the end-of-line conveyor system **1,** by means of interposing laths **L** or pallets **P** between the handling kinematic mechanisms **3** and each product **O.**

Usually, such loading is performed automatically by the production plant located upstream of the aforesaid end-of-line conveyor system **1.**

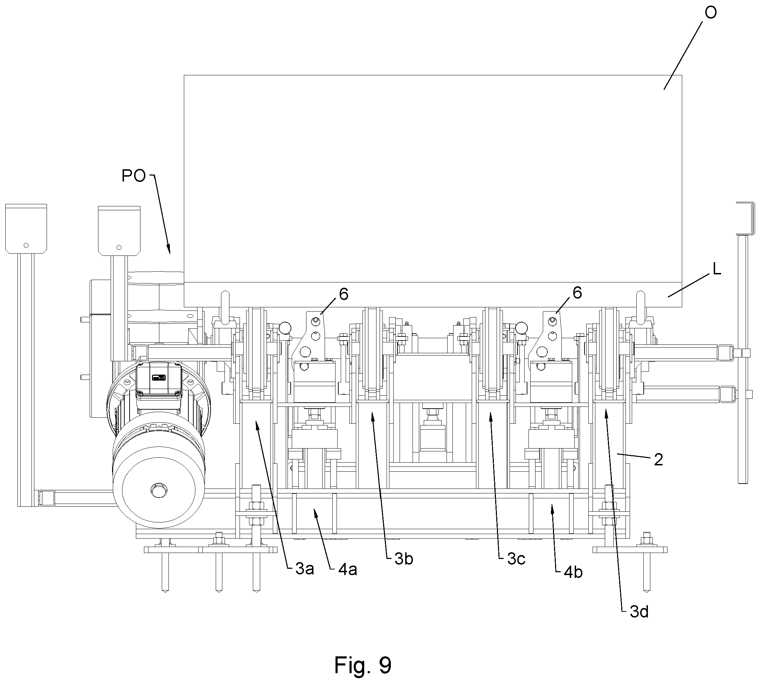

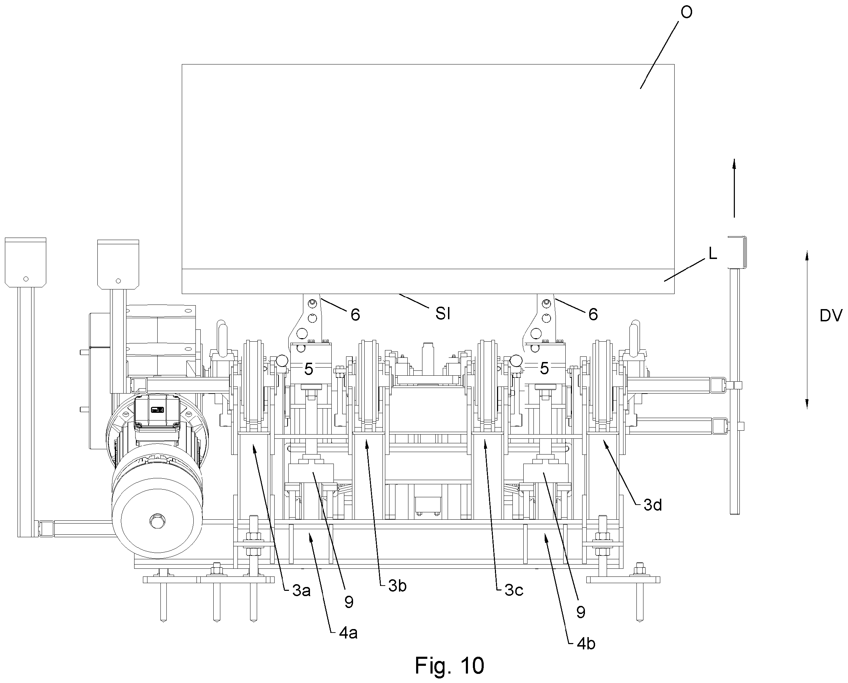

The method also provides handling these products **O** along the aforesaid predefined path **T** from the inlet point **PI** to a pick-up point **PO,** activating the aforesaid handling kinematic mechanisms **3,** always as schematised in Fig. 8. When the product **O** to be picked up is arranged at said pick-up point **PO,** as visible in Fig. 9, the method of the invention provides for deactivating the handling kinematic mechanisms **3** and lifting the lifting units **4,** so as to lift and disengage the same product **O** from such handling kinematic mechanisms **3,** as schematised in Fig. 10.

In particular, during such lifting, the comb-like elements **6** are all arranged in the aforesaid rest position, and those arranged below the laths **L** or the pallets **P,** supporting the product **O,** come into contact with the lower surfaces **SI** of the same laths **L** or pallets **P,** raising the product **O** relative to the handling kinematic mechanism **3.** The fact that such comb-like elements **6** engage with the lower surfaces **SI** of the laths **L** or of the pallets **P** prevents the former, arranged in the aforesaid rest position, from rotating freely in the forced position. On the other hand, the comb-like elements **6** located along a predefined path **T,** at different positions from the positions below the laths **L** and pallets **P,** remain disengaged from any hindrance and therefore in a free rotation configuration.

At this point, the product **O** present at the aforesaid pick-up point **PO** can be picked up by an operator, using a forklift **CE** provided with forks **F.**

In particular, the operator has the possibility of inserting the aforesaid forks **F,** suitably spaced according to the type of product **O** to be picked up, in particular according to the distance of the laths **L** or the design of the pallets **P,** in a direction orthogonal to the rotation axis **Y,** opposite to the oblique sides **8** of the comb-like elements **6.** Such insertion must obviously be carried out at positions along the predefined path **T** that do not correspond to the positions of the same laths **L** or pallets **P.**

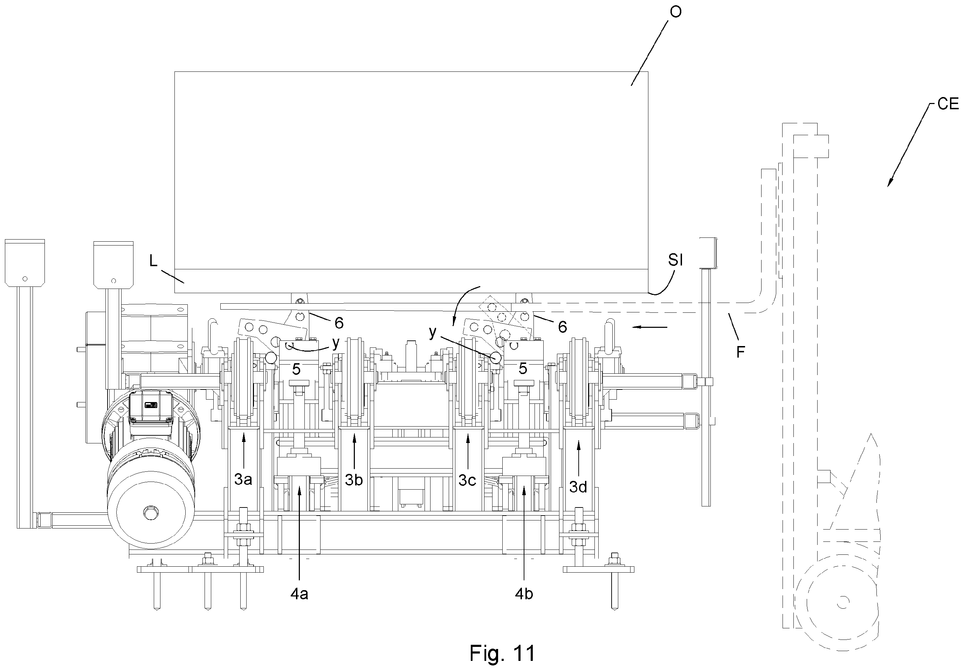

As schematised in Fig. 11, such insertion consequently pushes the comb-like elements **6** that are not engaged to the laths **L** or to the pallets **P,** and thus rotates them towards the aforesaid forced position, making it possible to completely advance the aforesaid forks **F** below the product **O** to be picked up. When the forks **F** are fully inserted below the product **O** to be picked up, the method provides lifting the same product **O** by means of the forklift **CE.**

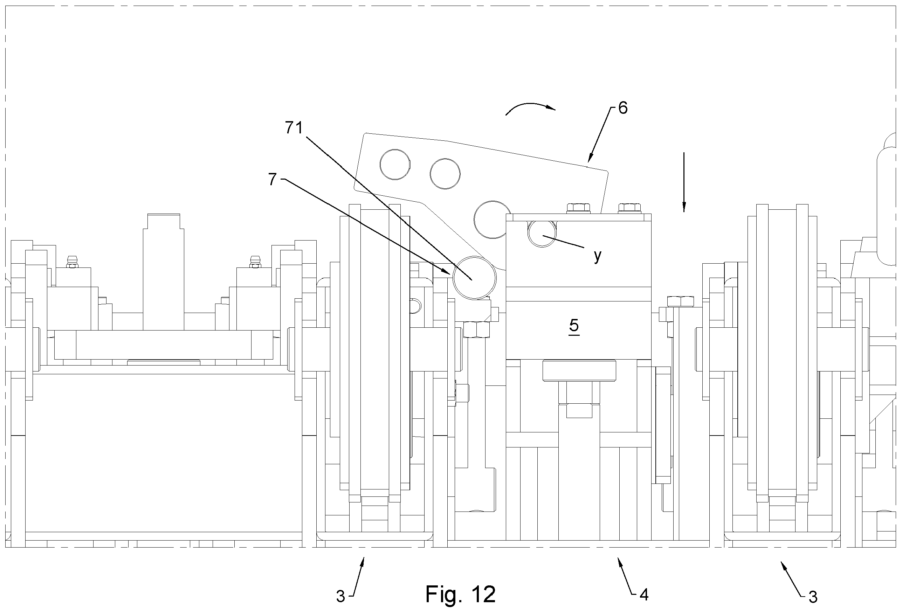

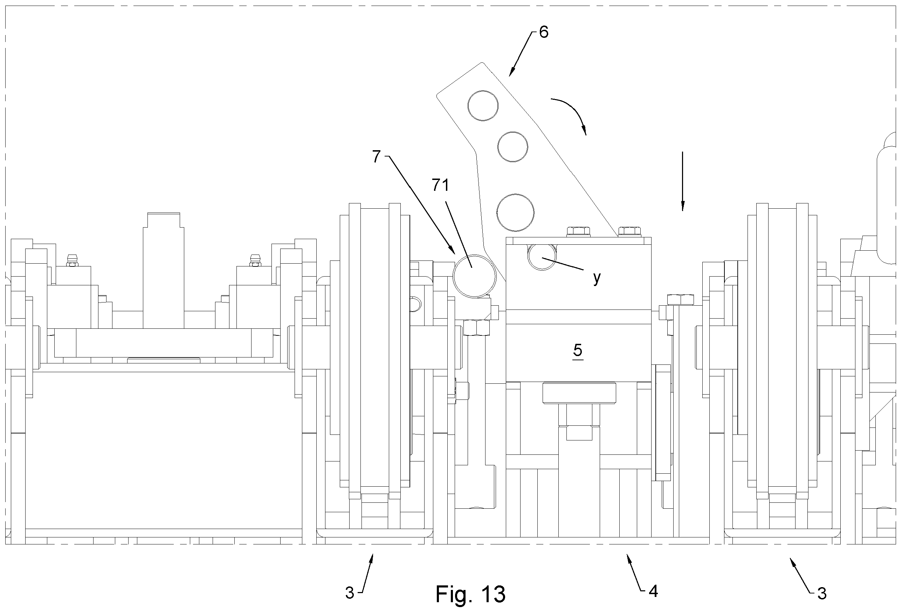

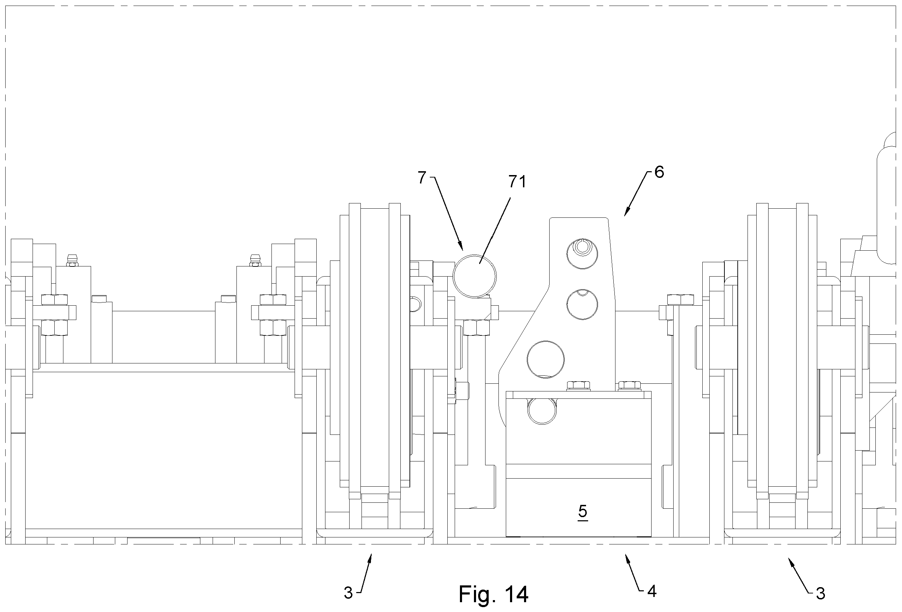

Finally, once the product **O** has been picked up, the method of the invention provides for lowering the lifting units **3** along the aforesaid vertical direction **DV** and, in so doing, as it can be observed in the sequence of Figures 12 to 14, the comb-like elements **6** arranged in the aforesaid forced position progressively come into contact with the return means **7,** in particular with the cylindrical contrast bar **71,** and are induced by the latter to rotate and assume the rest position. The lifting units **4** of the end-of-line conveyor system **1** of the invention are thereby arranged in their lowered position, with all the comb-like elements **6** positioned in their rest position, ready for a new convey and pick-up cycle of products **O.**

It is clear from the foregoing that the end-of-line conveyor system **1** of the invention achieves all the intended objects.

In particular, the object of creating a universal end-of-line conveyor system capable of handling any type of product format is achieved.

More specifically, the object of creating an end-of-line conveyor system that does not require adjustments or changes in the format in order to handle different types of products is achieved.

Furthermore, the object of creating an end-of-line conveyor system capable of automatically adapting to different types of products even during the same production batch is achieved.

## Claims

1. End-of-line conveyor system (1) defining a predefined path (T) that is substantially horizontal, along which one or more products (O) are adapted to be conveyed from an inlet point (PI) to a pick-up point (PO), of the type comprising:
- a support structure (2) defining said predefined path (T);
- at least one handling kinematic mechanism (3, 3a, 3b, 3c, 3d) associated with said support structure (2) and configured to move said products (O) from said inlet point (PI) to said pick-up point (PO);
- a lifting unit (4, 4a, 4b) associated with said support structure (2) and configured to lift and disengage said products (O) with respect to said handling kinematic mechanism (3, 3a, 3b, 3c, 3d), so that said products (O) can be picked up from said end-of-line conveyor system (1) by means of external forklifts (CE);
wherein said lifting unit (4, 4a, 4b) comprises:
- a lifting base (5) operatively associated with said support structure (2) so that it can be moved in a vertical direction (DV), said lifting base (5) extending along said predefined path (T);
- a plurality of comb-like elements (6), each substantially extending along a longitudinal axis (X), **characterised in that**
said comb-like elements (6) are freely hinged to said lifting base (5), one after the other, along said predefined path (T) according to a rotation axis (Y) parallel to said predefined path (T) so that each of said comb-like elements (6), independently of said remaining comb-like elements (6), can rotate from a first rest position, according to which said longitudinal axis (X) is parallel to said vertical direction (DV), to a second forced position, according to which said longitudinal axis (X) is parallel to the horizontal direction (DO), and vice versa;
and further **characterised in that** said lifting unit also comprises
- return means (7) configured to move said plurality of comb-like elements (6) from said second forced position to said first rest position.

2. End-of-line conveyor system (1) according to claim 1, **characterised in that** each of said comb-like elements (6), according to a plane orthogonal (π) to said rotation axis (Y), has, along said longitudinal axis (X), a first end section (61) with an asymmetrical shape and a second end section (62) with a symmetrical shape, joined to each other by an interconnection section (63) wherein an oblique side (8) relative to said longitudinal axis (X) is identified, said first end section (61) being hinged in an off-centred position to said lifting base (5) at said oblique side (8), each of said comb-like elements (6) being configured to rotate by an angle in the region of 90° about said rotation axis (Y), at said oblique side (8), from said first rest position to said second forced position.

3. End-of-line conveyor system (1) according to claim 2, **characterised in that** said return means (7) comprise a cylindrical contrast bar (71) arranged along said predefined path (T), adjacent to said comb-like elements (6) at said oblique sides (8), said cylindrical contrast bar (71) being configured to progressively contact said first asymmetrical section (61), said oblique side (8) of said interconnection section (63) and said second symmetrical section (62) of said comb-like elements (6) arranged in said second position while lowering said lifting unit (4, 4a, 4b) so as to force the rotation of said comb-like elements (6) from said forced position to said rest position.

4. End-of-line conveyor system (1) according to any one of claims 1 or 2, **characterised in that** said return means (7) comprise elastic elements (72) configured to force the rotation of said comb-like elements (6) from said forced position to said rest position.

5. End-of-line conveyor system (1) according to any one of the preceding claims, **characterised in that** it comprises four handling kinematic mechanisms (3, 3a, 3b, 3c, 3d) arranged parallel to each other along said predefined path (T), said lifting unit (4, 4a, 4b) being defined as interposed between two adjacent pairs of said four handling kinematic mechanisms (3, 3a, 3b, 3c, 3d).

6. End-of-line conveyor system (1) according to any one of the preceding claims, **characterised in that** it comprises two lifting units (4, 4a, 4b) arranged parallel to each other along said predefined path (T).

7. End-of-line conveyor system (1) according to any one of the preceding claims, **characterised in that** said handling kinematic mechanism (3, 3a, 3b, 3c, 3d) is a catenary system (31).

8. End-of-line conveyor system (1) according to any one of claims 1 to 6, **characterised in that** said handling kinematic mechanism (3, 3a, 3b, 3c, 3d) is a belt system.

9. End-of-line conveyor system (1) according to claim 1, **characterised in that** said lifting unit (4, 4a, 4b) comprises a plurality of hydraulic or pneumatic pistons (9) configured to move along said vertical direction (DV) said lifting base (5).

10. Method for conveying one or more products (O) along a predefined path (T) and for picking up said products (O) via an end-of-line conveyor system (1) according to any one of the preceding claims, **characterised in that** it provides the following steps:
- loading said products (O) at an inlet point (PI) of said end-of-line conveyor system (1), by means of laths (L) or pallets (P);
- moving said products along said predefined path (T) from said inlet point (PI) to a pick-up point (PO) by activating said handling kinematic mechanisms (3, 3a, 3b, 3c, 3d);
- when said product (O) is arranged at said pick-up point (PO), deactivating said handling kinematic mechanism (3, 3a, 3b, 3c, 3d) and lifting said lifting unit (4, 4a, 4b) so as to disengage said product from said handling kinematic mechanism (3, 3a, 3b, 3c, 3d); during said lifting, the comb-like elements (6) arranged in said rest position, below said laths (L) or said pallets (P), come into contact with the lower surfaces (SI) of said laths (L) or said pallets (P), lifting said products (O), while the comb-like elements (6) arranged in different positions along said predefined path (T) remain in a free rotation configuration;
- inserting in a direction orthogonal (DO) to said rotation axis (Y), opposite said oblique sides (8) of said comb-like elements (6), the forks (F) of an external forklift (CE), at different positions along said predefined path (T) with respect to the position of said laths (L) or said pallets (P), said insertion determining the rotation of said comb-like elements (6) at said different positions, from said rest position to said forced position;
- when said forks (F) are fully inserted, lifting said product (O) by means of said external forklift (CE) so as to pick up said product (O);
- once said product (O) has been picked up, lowering said lifting unit (4, 4a, 4b) along the vertical direction (DV), said lowering determining the rotation of said comb-like elements (6) arranged in said forced position, from said forced position to said rest position, by said return means (7).

## Patentansprüche

1. End-of-Line-Fördersystem (1), das einen im Wesentlichen horizontalen vordefinierten Pfad (T) definiert, entlang dem ein oder mehrere Produkte (O) von einer Eingangsstelle (PI) zu einer Aufnahmestelle (PO) befördert werden können, vom Typ, der Folgendes umfasst:
- eine Tragstruktur (2), die den besagten vordefinierten Pfad (T) definiert;
- mindestens einen kinematischen Handhabungsmechanismus (3, 3a, 3b, 3c, 3d), der mit der besagten Tragstruktur (2) verbunden ist und konfiguriert ist, um die besagten Produkte (O) von der besagten Eingangsstelle (PI) zur besagten Aufnahmestelle (PO) zu bewegen;
- eine Hebeeinheit (4, 4a, 4b), die mit der besagten Tragstruktur (2) verbunden ist und konfiguriert ist, um die besagten Produkte (O) in Bezug auf den besagten kinematischen Handhabungsmechanismus (3, 3a, 3b, 3c, 3d) anzuheben und zu lösen, sodass die besagten Produkte (O) durch externe Gabelstapler (CE) vom besagten End-of-Line-Fördersystem (1) aufgenommen werden können;
wobei die besagte Hebeeinheit (4, 4a, 4b) Folgendes umfasst:
- eine Hebebasis (5), die mit der besagten Tragstruktur (2) operativ verbunden ist, sodass sie in einer vertikalen Richtung (DV) bewegt werden kann, wobei sich die besagte Hebebasis (5) entlang des besagten vordefinierten Pfads (T) erstreckt;
- eine Vielzahl von kammartigen Elementen (6), die sich jeweils im Wesentlichen entlang einer Längsachse (X) erstrecken,
**dadurch gekennzeichnet, dass** die besagten kammartigen Elemente (6) nacheinander entlang des besagten vordefinierten Pfads (T) gemäß einer Drehachse (Y), die parallel zum besagten vordefinierten Pfad (T) ist, an der besagten Hebebasis (5) frei angelenkt sind, sodass sich jedes der besagten kammartigen Elemente (6) unabhängig von den besagten restlichen kammartigen Elementen (6) von einer ersten Ruheposition, gemäß der die besagte Längsachse (X) parallel zur besagten vertikalen Richtung (DV) ist, in eine zweite erzwungene Position, gemäß der die besagte Längsachse (X) parallel zur horizontalen Richtung (DO) ist, und umgekehrt drehen kann;
und ferner **dadurch gekennzeichnet, dass** die besagte Hebeeinheit zudem Folgendes umfasst:
- Rückholmittel (7), die konfiguriert sind, um die besagte Vielzahl von kammartigen Elementen (6) von der besagten zweiten erzwungenen Position in die besagte erste Ruheposition zu bewegen.

2. End-of-Line-Fördersystem (1) nach Patentanspruch 1, **dadurch gekennzeichnet, dass** jedes der besagten kammartigen Elemente (6) gemäß einer Ebene orthogonal (π) zur besagten Drehachse (Y) entlang der besagten Längsachse (X) einen ersten Endabschnitt (61) mit einer asymmetrischen Form und einen zweiten Endabschnitt (62) mit einer symmetrischen Form aufweist, die durch einen Verbindungsabschnitt (63), an dem eine schräge Seite (8) relativ zur besagten Längsachse (X) definiert wird, miteinander verbunden sind, wobei der besagte erste Endabschnitt (61) an der besagten schrägen Seite (8) in einer außermittigen Position an der besagten Hebebasis (5) angelenkt ist, wobei jedes der besagten kammartigen Elemente (6) konfiguriert ist, um sich um einen Winkel im Bereich von 90° um die besagte Drehachse (Y) an der besagten schrägen Seite (8) von der besagten ersten Ruheposition in die besagte zweite erzwungene Position zu drehen.

3. End-of-Line-Fördersystem (1) nach Patentanspruch 2, **dadurch gekennzeichnet, dass** die besagten Rückholmittel (7) eine zylindrische Kontraststange (71) umfassen, die entlang des besagten vordefinierten Pfads (T) benachbart zu den besagten kammartigen Elementen (6) an den besagten schrägen Seiten (8) angeordnet ist, wobei die besagte zylindrische Kontraststange (71) konfiguriert ist, um den besagten ersten asymmetrischen Abschnitt (61), die besagte schräge Seite (8) des besagten Verbindungsabschnitts (63) und den besagten zweiten symmetrischen Abschnitt (62) der besagten kammartigen Elemente (6), die in der besagten zweiten Position angeordnet sind, während die besagte Hebeeinheit (4, 4a, 4b) abgesenkt wird, sukzessive zu berühren, derart, dass die Drehung der besagten kammartigen Elemente (6) von der besagten erzwungenen Position in die besagte Ruheposition erzwungen wird.

4. End-of-Line-Fördersystem (1) nach einem der Patentansprüche 1 oder 2, **dadurch gekennzeichnet, dass** die besagten Rückholmittel (7) elastische Elemente (72) umfassen, die konfiguriert sind, um die Drehung der besagten kammartigen Elemente (6) von der besagten erzwungenen Position in die besagte Ruheposition zu erzwingen.

5. End-of-Line-Fördersystem (1) nach jeglichem der vorhergehenden Patentansprüche, **dadurch gekennzeichnet, dass** es vier kinematische Handhabungsmechanismen (3, 3a, 3b, 3c, 3d) umfasst, die entlang des besagten vordefinierten Pfads (T) parallel zueinander angeordnet sind, wobei die besagte Hebeeinheit (4, 4a, 4b) so definiert ist, dass sie zwischen zwei benachbarten Paaren der besagten vier kinematischen Handhabungsmechanismen (3, 3a, 3b, 3c, 3d) eingefügt ist.

6. End-of-Line-Fördersystem (1) nach jeglichem der vorhergehenden Patentansprüche, **dadurch gekennzeichnet, dass** es zwei Hebeeinheiten (4, 4a, 4b) umfasst, die entlang des besagten vordefinierten Pfads (T) parallel zueinander angeordnet sind.

7. End-of-Line-Fördersystem (1) nach jeglichem der vorhergehenden Patentansprüche, **dadurch gekennzeichnet, dass** der besagte kinematische Handhabungsmechanismus (3, 3a, 3b, 3c, 3d) ein Kettenliniensystem (31) ist.

8. End-of-Line-Fördersystem (1) nach jeglichem der Patentansprüche 1 bis 6, **dadurch gekennzeichnet, dass** der besagte kinematische Handhabungsmechanismus (3, 3a, 3b, 3c, 3d) ein Bandsystem ist.

9. End-of-Line-Fördersystem (1) nach Patentanspruch 1, **dadurch gekennzeichnet, dass** die besagte Hebeeinheit (4, 4a, 4b) eine Vielzahl von hydraulischen oder pneumatischen Kolben (9) umfasst, die konfiguriert sind, um sich entlang der besagten vertikalen Richtung (DV) der besagten Hebebasis (5) zu bewegen.

10. Verfahren zum Befördern eines oder mehrerer Produkte (O) entlang eines vordefinierten Pfads (T) und zum Aufnehmen der besagten Produkte (O) über ein End-of-Line-Fördersystem (1) nach jeglichem der vorhergehenden Patentansprüche, **dadurch gekennzeichnet, dass** es die folgenden Schritte vorsieht:
- Laden der besagten Produkte (O) an einer Eingangsstelle (PI) des besagten End-of-Line-Fördersystems (1) durch Latten (L) oder Paletten (P);
- Bewegen der besagten Produkte entlang des besagten vordefinierten Pfads (T) von der besagten Eingangsstelle (PI) zu einer Aufnahmestelle (PO) durch Aktivieren der besagten kinematischen Handhabungsmechanismen (3, 3a, 3b, 3c, 3d);
- Deaktivieren des besagten kinematischen Handhabungsmechanismus (3, 3a, 3b, 3c, 3d) und Anheben der besagten Hebeeinheit (4, 4a, 4b), wenn das besagte Produkt (O) an der besagten Aufnahmestelle (PO) angeordnet ist, derart, dass das Produkt vom besagten kinematischen Handhabungsmechanismus (3, 3a, 3b, 3c, 3d) gelöst wird; während des besagten Anhebens kommen die kammartigen Elemente (6), die in der besagten Ruheposition unterhalb der besagten Latten (L) oder der besagten Paletten (P) angeordnet sind, mit den unteren Oberflächen (SI) der besagten Latten (L) oder der besagten Paletten (P) in Berührung, wobei die besagten Produkte (O) angehoben werden, während die besagten kammartigen Elemente (6), die in verschiedenen Positionen entlang des besagten vordefinierten Pfads (T) angeordnet sind, in einer freien Drehkonfiguration bleiben;
- Einführen der Gabeln (F) eines externen Gabelstaplers (CE) in einer Richtung orthogonal (DO) zur besagten Drehachse (Y), gegenüber den besagten schrägen Seiten (8) der besagten kammartigen Elemente (6), an verschiedenen Positionen entlang des besagten vordefinierten Pfads (T) in Bezug auf die Position der besagten Latten (L) oder der besagten Paletten (P), wobei das besagte Einführen die Drehung der besagten kammartigen Elemente (6) an den besagten verschiedenen Positionen von der besagten Ruheposition in die besagte erzwungene Position bestimmt;
- Anheben des besagten Produkts (O) durch den besagten externen Gabelstapler (CE), wenn die besagten Gabeln (F) vollständig eingesetzt sind, derart, dass das besagte Produkt (O) aufgenommen wird;
- Absenken der besagten Hebeeinheit (4, 4a, 4b) entlang der vertikalen Richtung (DV), sobald das besagte Produkt (O) aufgenommen wurde, wobei das besagte Absenken die Drehung der besagten kammartigen Elemente (6), die in der besagten erzwungenen Position angeordnet sind, von der besagten erzwungenen Position in die besagte Ruheposition durch die besagten Rückholmittel (7) bestimmt.

## Revendications

1. Système de convoyage de fin de ligne (1) définissant une trajectoire prédéfinie (T) essentiellement horizontale, le long de laquelle un ou plusieurs produits (O) sont adaptés pour être transportés d'un point d'entrée (PI) à un point de prélèvement (PO), du type comprenant:
- une structure de support (2) définissant ladite trajectoire prédéfinie (T);
- au moins un mécanisme cinématique de manutention (3, 3a, 3b, 3c, 3d) associé à ladite structure de support (2) et configuré pour déplacer lesdits produits (O) dudit point d'entrée (PI) vers ledit point de prélèvement (PO);
- une unité de levage (4, 4a, 4b) associée à ladite structure de support (2) et configurée pour soulever et désengager lesdits produits (O) par rapport audit mécanisme cinématique de manutention (3, 3a, 3b, 3c, 3d), afin que lesdits produits (O) puissent être prélevés dudit système de convoyage de fin de ligne (1) au moyen de chariots élévateurs externes (CE);
où ladite unité de levage (4, 4a, 4b) comprend:
- une base de levage (5) associée de manière opérationnelle à ladite structure de support (2) afin qu'elle puisse être déplacée dans une direction verticale (DV), ladite base de levage (5) s'étendant le long de ladite trajectoire prédéfinie (T);
- une pluralité d'éléments en forme de peigne (6), chacun s'étendant sensiblement le long d'un axe longitudinal (X),
**caractérisés en ce que** lesdits éléments en forme de peigne (6) sont librement articulés à ladite base de levage (5), l'un après l'autre, le long de ladite trajectoire prédéfinie (T) selon un axe de rotation (Y) parallèle à ladite trajectoire prédéfinie (T), de sorte que chacun desdits éléments en forme de peigne (6), indépendamment desdits éléments en forme de peigne restants (6), puisse tourner d'une première position de repos, selon laquelle ledit axe longitudinal (X) est parallèle à ladite direction verticale (DV), à une deuxième position forcée, selon laquelle ledit axe longitudinal (X) est parallèle à la direction horizontale (DO), et vice versa;
et **caractérisé en outre en ce que** ladite unité de levage comprend également
- des moyens de retour (7) configurés pour déplacer ladite pluralité d'éléments en forme de peigne (6) de ladite deuxième position forcée à ladite première position de repos.

2. Système de convoyage de fin de ligne (1) selon la revendication 1, **caractérisé en ce que** chacun desdits éléments en forme de peigne (6), selon un plan orthogonal (π) audit axe de rotation (Y), présente, le long dudit axe longitudinal (X), une première section d'extrémité (61) de forme asymétrique et une deuxième section d'extrémité (62) de forme symétrique, reliées l'une à l'autre par une section d'interconnexion (63) dans laquelle un côté oblique (8) par rapport audit axe longitudinal (X) est identifié, ladite première section d'extrémité (61) étant articulée en position décentrée sur ladite base de levage (5) au niveau dudit côté oblique (8), chacun desdits éléments en forme de peigne (6) étant configuré pour tourner d'un angle de l'ordre de 90° autour dudit axe de rotation (Y), au niveau dudit côté oblique (8), de ladite première position de repos à ladite deuxième position forcée.

3. Système de convoyage de fin de ligne (1) selon la revendication 2, **caractérisé en ce que** lesdits moyens de retour (7) comprennent une barre de contraste cylindrique (71) disposée le long de ladite trajectoire prédéfinie (T), adjacente auxdits éléments en forme de peigne (6) au niveau desdits côtés obliques (8), ladite barre de contraste cylindrique (71) étant configurée pour entrer progressivement en contact avec ladite première section asymétrique (61), ledit côté oblique (8) de ladite section d'interconnexion (63) et ladite deuxième section symétrique (62) desdits éléments en forme de peigne (6) disposés dans ladite deuxième position tout en abaissant ladite unité de levage (4, 4a, 4b) de manière à forcer la rotation desdits éléments en forme de peigne (6) de ladite position forcée à ladite position de repos.

4. Système de convoyage de fin de ligne (1) selon l'une quelconque des revendications 1 ou 2, **caractérisé en ce que** lesdits moyens de retour (7) comprennent des éléments élastiques (72) configurés pour forcer la rotation desdits éléments en forme de peigne (6) de ladite position forcée à ladite position de repos.

5. Système de convoyage de fin de ligne (1) selon l'une quelconque des revendications précédentes, **caractérisé en ce qu'**il comprend quatre mécanismes cinématiques de manutention (3, 3a, 3b, 3c, 3d) disposés parallèlement les uns aux autres le long de ladite trajectoire prédéfinie (T), ladite unité de levage (4, 4a, 4b) étant définie comme étant interposée entre deux paires adjacentes desdits quatre mécanismes cinématiques de manutention (3, 3a, 3b, 3c, 3d).

6. Système de convoyage de fin de ligne (1) selon l'une quelconque des revendications précédentes, **caractérisé en ce qu'**il comprend deux unités de levage (4, 4a, 4b) disposées parallèlement l'une à l'autre le long de ladite trajectoire prédéfinie (T).

7. Système de convoyage de fin de ligne (1) selon l'une quelconque des revendications précédentes, **caractérisé en ce que** ledit mécanisme cinématique de manutention (3, 3a, 3b, 3c, 3d) est un système de caténaire (31).

8. Système de convoyage de fin de ligne (1) selon l'une quelconque des revendications 1 à 6, **caractérisé en ce que** ledit mécanisme cinématique de manutention (3, 3a, 3b, 3c, 3d) est un système à courroie.

9. Système de convoyage de fin de ligne (1) selon la revendication 1, **caractérisé en ce que** ladite unité de levage (4, 4a, 4b) comprend une pluralité de pistons hydrauliques ou pneumatiques (9) configurés pour déplacer ladite base de levage (5) le long de ladite direction verticale (DV).

10. Procédé de convoyage d'un ou plusieurs produits (O) le long d'une trajectoire prédéfinie (T) et de prélèvement desdits produits (O) via un système de convoyage de fin de ligne (1) selon l'une quelconque des revendications précédentes, **caractérisé en ce qu'**il prévoit les étapes suivantes:
- charger lesdits produits (O) à un point d'entrée (PI) dudit système de convoyage de fin de ligne (1), au moyen de lattes (L) ou de palettes (P);
- déplacer lesdits produits le long de ladite trajectoire prédéfinie (T) dudit point d'entrée (PI) à un point de prélèvement (PO) en activant lesdits mécanismes cinématiques de manutention (3, 3a, 3b, 3c, 3d);
- lorsque ledit produit (O) est disposé audit point de prélèvement (PO), désactiver ledit mécanisme cinématique de manutention (3, 3a, 3b, 3c, 3d) et soulever ladite unité de levage (4, 4a, 4b) de manière à désengager ledit produit dudit mécanisme cinématique de manutention (3, 3a, 3b, 3c, 3d); pendant ledit levage, les éléments en forme de peigne (6) disposés dans ladite position de repos, sous lesdites lattes (L) ou lesdites palettes (P), entrent en contact avec les surfaces inférieures (SI) desdites lattes (L) ou desdites palettes (P), en soulevant lesdits produits (O), tandis que les éléments en forme de peigne (6) disposés dans différentes positions le long de ladite trajectoire prédéfinie (T) restent dans une configuration de rotation libre;
- insérer dans une direction orthogonale (DO) audit axe de rotation (Y), en face desdits côtés obliques (8) desdits éléments en forme de peigne (6), les fourches (F) d'un chariot élévateur externe (CE), à différentes positions le long de ladite trajectoire prédéfinie (T) par rapport à la position desdites lattes (L) ou desdites palettes (P), ladite insertion déterminant la rotation desdits éléments en forme de peigne (6) auxdites différentes positions, de ladite position de repos à ladite position forcée;
- lorsque lesdites fourches (F) sont complètement insérées, soulever ledit produit (O) au moyen dudit chariot élévateur externe (CE) afin de prélever ledit produit (O);
- une fois que ledit produit (O) a été prélevé, abaisser ladite unité de levage (4, 4a, 4b) le long de la direction verticale (DV), ledit abaissement déterminant la rotation desdits éléments en forme de peigne (6) disposés dans ladite position forcée, de ladite position forcée à ladite position de repos, par ledit moyen de retour (7).
